# EUROPEAN PATENT SPECIFICATION

(11) **EP 1 671 053 B1**
(45) Date of publication and mention of the grant of the patent: **10.09.2008**
(21) Application number: 04768819.7
(22) Date of filing: 08.10.2004
(51) Int. Cl.: F16H 57/12, F16H 59/02

(54) **MANUAL ACTUATING MECHANISM**
MECHANISMUS ZUR MANUELLEN BETÄTIGUNG
MECANISME D'ACTIONNEMENT MANUEL

(30) Priority: 08.10.2003 GB 0323578
(43) Date of publication of application: 21.06.2006
(73) Proprietor: RICARDO UK LIMITED, Shoreham-by-Sea, West Sussex BN43 5FG (GB)
(72) Inventor: RAMSAY, Keith, Northamptonshire NN13 5LP (GB); TURNER, Andrew, Warwickshire CV31 1UE (GB); WHEALS, Jonathan, Leicestershire LE11 3RA (GB)
(74) Representative: Chettle, Adrian John
(86) International application number: PCT/GB2004/004288
(87) International publication number: WO 2005/036031

(56) References cited:
- EP-A- 0 656 491
- US-A1- 2003 085 086
- US-B1- 6 340 080

## Description

The present invention relates to manually operated actuating mechanisms of the type comprising a manually actuable lever arranged to transmit movement to an actuating member. Such actuating mechanisms are known in a wide variety of constructions and applications but the present invention is particularly, though not exclusively, concerned with such mechanisms for automotive use.

Document US 2003/0085086, which constitutes the closest prior art, shows a rotatable steering shaft of a motor vehicle comprising magneto-rheological fluid around the rotor to dampen vibrations.

It is increasingly common for motor vehicles to include a gearbox of so-called manual automatic type, in which the changing of the gears is effected mechanically by one or more actuators. These actuators may be controlled by the engine management system, that is to say the electronic control system with which most modem vehicles are now fitted, but it is common for there also to be a manual override which permits the driver to move a gear change lever to indicate the gear ratio that he wishes to use. This lever is not connected to operate the gear change mechanism directly but is instead connected to move an actuating member, which is also connected to a mechanical actuator, e.g. an electric or hydraulic motor, controlled by the engine management system and is connected to the actual gear change mechanism.

The gear change lever is typically connected to the actuating member by engaging gear teeth and whilst the gears may take many forms, it is common for worm and wheel gears to be used. Relatively cheap and simple gears are effective but also have considerable tolerances which result in free play (lash) in the lever. The effect of even a relatively small amount of free play between the engaging gear teeth is magnified by the length of the gear change lever. People are, however, highly sensitive to free play in such levers and view it as an indication of low quality, even though the gearing is in fact wholly functional. Simple remedies, such as the use of a spring element to take up the free play, or a damper, such as a damping device using a silicone-based fluid, to mask the free play, introduce additional loads which must be overcome by the actuator. The increase in capacity of the actuator which may be necessary can often make these solutions to the problem impracticable.

It is therefore the object of the invention to provide a manual actuating mechanism of the type referred to above which can incorporate relatively cheap and simple engaging gear teeth but which nevertheless exhibits little or no free play of the operating lever.

According to the present invention, a manual actuating mechanism comprises a lever and an actuating member, each of which carries at least one gear tooth, the gear teeth being in engagement and operable to transmit movement of the lever to the actuating member, the engaging gear teeth defining a clearance which is occupied by a magneto-rheological fluid (MRF), the mechanism further including one or more electromagnetic coils arranged to produce an electromagnetic field in the vicinity of the MRF and thus to alter its viscosity.

Thus in the mechanism in accordance with the invention the lever, which is typically pivotally mounted, is in mechanical engagement with the actuating member by means of at least a pair of engaging gear teeth and in practice it is likely that each of them will carry an array of gear teeth. The engaging gear teeth may be of worm and toothed gear segment type but a wide range of types of gear is possible. Engaging gear teeth always define clearances and it is these clearances which are responsible for the free play or lash that is typically experienced. These clearances are usually partially occupied by lubricating grease or the like but in the mechanism in accordance with the invention they are occupied by a magneto-rheological fluid. Such fluids are well known and comprise a liquid, typically of relatively high viscosity, containing a large number of small ferromagnetic particles. When MRF is subjected to a magnetic field, the interaction of this field with the ferromagnetic particles results in an increase in the viscosity of the fluid and the viscosity achieved may be adjusted by controlling the magnitude of the electromagnetic field. If the field strength is high enough, the liquid may act virtually like a solid. The mechanism in accordance with the invention includes one or more electromagnetic coils arranged to produce an electromagnetic field in the vicinity of the MRF and thus to alter its viscosity. In use, electric power is supplied to the or each electromagnetic coil, at least when the lever is manually actuated, and the power is adjusted so that the viscosity of the MRF reaches a value which is sufficiently high to mask or absorb the free play that would otherwise result from the presence of the clearances but is sufficiently low to permit relative movement of the engaging gear teeth. The user therefore feels little or no free play and gains the impression that the actuating mechanism is machined to a high degree of accuracy and is thus of very high quality.

In use, the or each magnetic coil will be connected to a source of electric power via a controller and it is preferred that the lever includes a sensor whose output is connected to the controller and determines the magnitude of the electrical power applied to the electromagnetic coil(s). Thus whilst it would be possible to supply electric power to the electromagnetic coils at all times, this is not necessary and would result in the unnecessary consumption of electric power and it is therefore preferred that electric power is applied to the electromagnetic coils only at those times when this is necessary, that is to say when the lever is manually actuated and it is preferred that the mechanism includes a sensor arranged to sense when the lever is being actuated or is about to be actuated.

Thus the sensor may be a proximity sensor, e.g. of capacitative type, which senses the immediate presence of the hand of a user and the signal which it produces may be used by the controller to commence the application of electrical power to the electromagnetic coils. Alternatively or additionally, a sensor may be provided responsive to the pressure applied to the lever by the hand of a user. Thus the presence of free play and the magnitude of that free play perceived by the user is dependent, at least to an extent, on the magnitude of the pressure applied to the lever by the user. If the user applies a high pressure to the lever, a higher viscosity of the MRF is desirable in order adequately to mask the free play. The pressure sensor, which may be in the form of a strain gauge incorporated into the lever, is preferably arranged to produce an output signal whose magnitude is dependent on the magnitude of the pressure applied to the lever by a user and the controller is preferably arranged to respond to this signal to increase the electrical power supplied to the electromagnetic coils in response to an increase in output signal from the sensor.

In order to ensure that the MRF reliably occupies most or all of the clearances between the engaging gear teeth, it is preferred that these gear teeth are accommodated within a housing in which the MRF is situated. The housing will thus in practice be at least partially filled and perhaps wholly filled with MRF.

Further features and details of the invention will be apparent from the following description of one specific embodiment, which is given by way of example only with reference to the accompanying highly diagrammatic drawings in which:

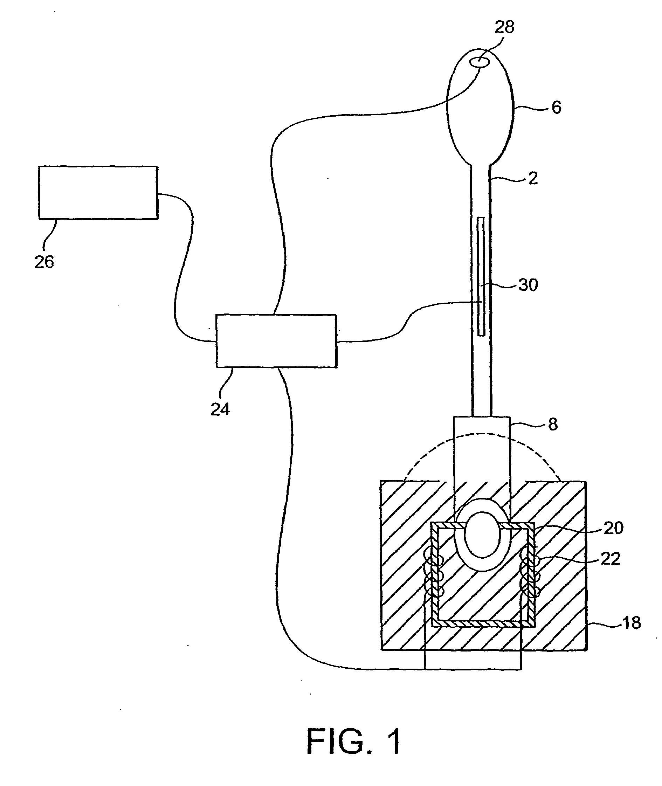

Figure 1 is an end view of a manual actuating mechanism comprising an automotive manual gear change mechanism in accordance with the invention; and

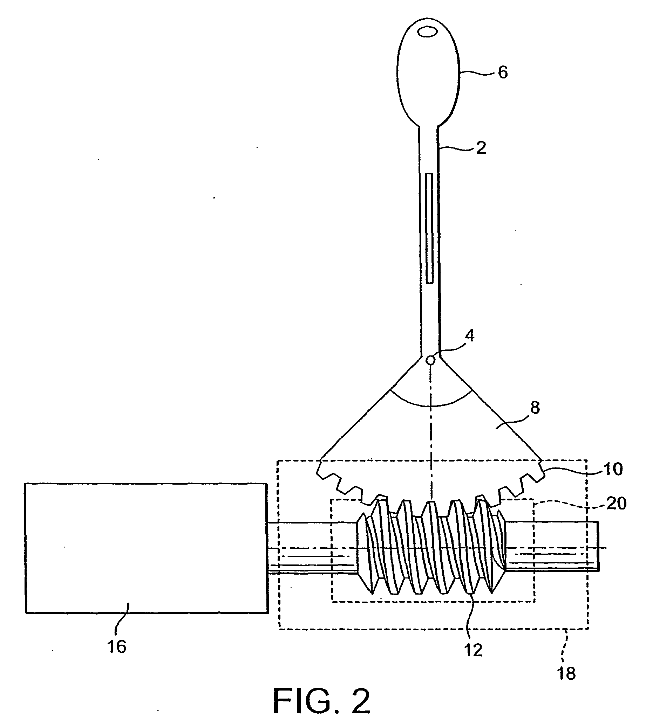

Figure 2 is a side view of the mechanism of Figure 1, from which the electrical components have been omitted for the sake of simplicity.

The mechanism comprises a manually operable gear change lever 2, which is mounted to be pivotable about a shaft 4. Integral with one end of the lever 2 is a knob or hand ball 6 which, in use, is grasped by the hand of the user. Integral with the other end of the lever 2 is a gear segment 8, integral with whose outer part-circular surface are gear teeth 10. The gear teeth 10 are in mesh with the helical gear tooth of a worm wheel 12, which forms an integral part of a rotary actuating shaft 14. The actuating shaft 14 is connected to an actuator 16, e.g. an electric or hydraulic motor, and to the gear changing mechanism of a gearbox, which is not shown.

The meshing gear teeth 10 and 12 are located within a housing 18 which is substantially full of MRF. The MRF is selected to have the properties appropriate to the particular application but a suitable fluid is that sold by Liquids Research Limited under the designation MRHCCS4-B, which is a thixotropic fluid with an 80% packing of carbonyl iron by mass. Situated within the housing 18 is a soft iron core or frame 20 of generally hollow rectangular shape, around two opposed sides or limbs of which are wound respective electromagnetic coils 22. The coils are so arranged that the electromagnetic field which they produce, when energised, acts at least on the region in which the gear teeth 10 and 12 are in engagement with one another. The coils 22 are electrically connected to a controller 24, which is in turn connected to a source of electrical power 26, e.g. the battery of the vehicle in which the mechanism is installed. Embedded within the knob 6 is a proximity sensor 28, which is electrically connected to the controller 24. Embedded within the lever 2 is a strain gauge 30, which is arranged to produce an output indicative of the magnitude of the force applied by the user to the knob 6. The strain gauge 30 is also electrically connected to the controller 24.

In use, the illustrated mechanism will be installed in a motor vehicle with a gearbox of manual automatic type. In normal operation, gear changing is effected automatically by the actuator 16, which rotates the actuator rod 14 to the desired position to effect the desired gear change in response to signals produced by the engine management system of the vehicle. If, however, the driver should wish to override the automatic gear change sequence, he may do so by grasping the knob 6 and moving the lever 2 to a position which indicates the gear ratio in which he wishes the gearbox to operate. The controller 24 normally provides no power to the electromagnetic coils 22 which means that the MRF occupying the clearance between the engaging gear teeth 10 and 12 has a relatively low viscosity. However, as the hand of the user approaches the knob 6, this is detected by the proximity sensor 28 whose electrical output signal is transmitted to the controller 24. The controller 24 is programmed immediately to transmit electrical power from the battery 26 to the electromagnetic coils 22, which produce an electromagnetic field acting on the MRF in the clearance between the engaging gear teeth. The viscosity of the MRF is immediately substantially increased such that the fluid within the clearance becomes semi-solid, whereby the user perceives no free play in the lever. If the force exerted by the user on the knob 6 should be substantial, thereby resulting in the risk that the MRF in the clearance between the engaging gear teeth might yield under the implied load thereby permitting the user to perceive a certain amount of free play, the electrical output from the strain gauge 30 rise until it reaches a predetermined level set in the controller 24, which is programmed to increase the electrical power supplied to the coils 22 so as to increase the intensity of the electromagnetic field to which the MRF in the clearance between the engaging gear teeth is subjected. The viscosity of the MRF is thus increased to a level appropriate to the magnitude of the force exerted by the user on the knob 6 so that the user does not perceive any free play in the movement of the lever 2. As soon as the user removes his hand from the knob 6, this is detected by the sensor 28, and indeed the sensor 30, and the controller 24 then ceases to supply electrical power to the coils 22. The free play in the position of the lever is then restored due to the substantially decreased viscosity of the MRF in the clearance between the engaging gear teeth but this is of course not detected by the user since his hand is no longer touching the knob 6.

## Claims

1. A manual actuating mechanism comprising a lever (2) and an actuating member (16), each of which carries at least one gear tooth (10,12), the gear teeth being in engagement and operable to transmit movement of the lever (2) to the actuating member, the engaging gear teeth (10,12) defining a clearance which is occupied by a magneto-rheological fluid, the mechanism further including one or more electromagnetic coils (22) arranged to produce an electromagnetic field in the vicinity of the magneto-rheological fluid and thus to alter its viscosity.

2. A mechanism as claimed in Claim 1 in which the or each magnetic coil (22) is connected to a source of electric power (26) via a controller (24) and the lever (2) includes a sensor (28) whose output is connected to the controller (24) and determines the magnitude of the electrical power applied to the electromagnetic coils (22).

3. A mechanism as claimed in Claim 2 in which the sensor (28) is responsive to the pressure applied to the lever (2) by the hand of a user.

4. A mechanism as claimed in Claim 2 in which the sensor (28) is responsive to the proximity of the hand of a user.

5. A mechanism as claimed in any one of the preceding claims in which the engaging gear teeth (10,12) are accommodated in a housing (18) in which the magneto-rheological fluid is situated.

## Patentansprüche

1. Manueller Betätigungsmechanismus umfassend einen Hebel (2) und ein Betätigungselement (16), deren jedes mindestens einen Zahnradzahn (10, 12) trägt, wobei die Zahnradzähne verzahnt sind und so betätigbar sind, dass sie eine Bewegung des Hebels (2) an das Betätigungselement übertragen, wobei die verzahnten Zahnradzähne (10, 12) einen Zwischenraum definieren, der von einem magneto-rheologischen Fluid eingenommen ist, wobei der Mechanismus ferner eine oder mehrere elektromagnetische Spulen (22) beinhaltet, die so ausgebildet sind, dass sie ein elektromagnetisches Feld im Bereich des magnetorheologischen Fluids bilden und damit seine Viskosität verändern.

2. Mechanismus nach Anspruch 1, in dem die oder jede magnetische Spule (22) über eine Steuerung (24) mit einer elektrischen Energiequelle (26) verbunden ist und der Hebel (2) einen Sensor (28) aufweist, dessen Ausgabe mit der Steuerung (24) verbunden ist und die Höhe der an die elektromagnetischen Spulen (22) angelegten elektrischen Energie bestimmt.

3. Mechanismus nach Anspruch 2, in dem der Sensor (28) auf Druck anspricht, der über den Hebel (2) durch die Hand eines Benutzers ausgeübt wird.

4. Mechanismus nach Anspruch 2, in dem der Sensor (28) auf die Nähe der Hand eines Benutzers anspricht.

5. Mechanismus nach einem der vorhergehenden Ansprüche, in dem die verzahnten Zahnradzähne (10, 12) in einem Gehäuse (18) untergebracht sind, in dem sich das magneto-rheologische Fluid befindet.

## Revendications

1. Mécanisme d'actionnement manuel, comprenant un levier (2) et un élément d'actionnement (16), chacun portant au moins une dent d'engrenage (10, 12), les dents d'engrenage étant en prise et utilisables pour transmettre un mouvement du levier (2) à l'élément d'actionnement, les dents d'engrenage en prise (10, 12) définissant un espace qui est occupé par un fluide magnéto-rhéologique, le mécanisme comprenant en outre une ou plusieurs bobines électromagnétiques (22) prévues pour produire un champ électromagnétique à proximité du fluide magnéto-rhéologique, et modifier ainsi sa viscosité.

2. Mécanisme selon la revendication 1, dans lequel la ou chaque bobine électromagnétique (22) est reliée à une source d'énergie électrique (26) à l'aide d'un dispositif de commande (24), et le levier (2) comprend un capteur (28) dont la sortie est reliée au dispositif de commande (24) et détermine la grandeur de l'énergie électrique fournie aux bobines électromagnétiques (22).

3. Mécanisme selon la revendication 2, dans lequel le capteur (28) réagit à la pression exercée sur le levier (2) par la main d'un utilisateur.

4. Mécanisme selon la revendication 2, dans lequel le capteur (28) réagit à la proximité de la main d'un utilisateur.

5. Mécanisme selon l'une quelconque des revendications précédentes, dans lequel les dents d'engrenage en prise (10, 12) sont logées dans un carter (18) dans lequel est situé le fluide magnéto-rhéologique.
